# EUROPÄISCHE PATENTSCHRIFT

(11) **EP 2 826 735 B1**
(45) Veröffentlichungstag und Bekanntmachung des Hinweises auf die Patenterteilung: **01.02.2017**
(21) Anmeldenummer: 14175217.0
(22) Anmeldetag: 01.07.2014
(51) Int. Cl.: B65G 47/51

(54) **Einstellbarer Speicherabschnitt einer Fördereinrichtung und Verfahren zum Zwischenspeichern von Artikeln**
Adjustable storage section of a conveyor device and method for the intermediate storage of items
Section ajustable de stockage tampon d'un dispositif de convoyage et procédé de stockage intermédiaire d'articles

(30) Priorität: 17.07.2013 DE 102013107582
(43) Veröffentlichungstag der Anmeldung: 21.01.2015
(73) Patentinhaber: Krones Aktiengesellschaft, 93073 Neutraubling (DE)
(72) Erfinder: SEGER, Martin, 93073 Neutraubling (DE); HÜTTNER, Johann, 93073 Neutraubling (DE); WAHL, Matthias, 93073 Neutraubling (DE)
(74) Vertreter: Benninger, Johannes

(56) Entgegenhaltungen:
- EP-B1- 2 184 240
- WO-A1-2008/026478
- ES-A1- 2 400 901
- FR-A1- 2 810 653
- US-A- 4 413 724
- US-A1- 2007 221 478

## Beschreibung

Die vorliegende Erfindung betrifft einen Speicherabschnitt zum Zwischenspeichern von Artikeln, Pack- oder Stückgütern einer Fördereinrichtung zum kontinuierlichen oder diskontinuierlichen Fördern von Artikeln, Pack- oder Stückgütern. Die Erfindung betrifft weiterhin ein Verfahren zum Zwischenspeichern von Artikeln, Pack- oder Stückgütern, die mittels einer Fördereinrichtung kontinuierlich oder diskontinuierlich gefördert werden.

In Abfüll-, Handhabungs- und/oder Verpackungsanlagen werden Artikel, Pack- oder Stückgüter und/oder Gebinde aller Art in der Regel mittels zahlreicher Förderanlagen und auf unterschiedlichen Förderstrecken befördert, u.a. zur Verbindung verschiedener Maschinenteile oder -module. Bei einem Produktwechsel, bei einer Maschinenabschaltung oder bei auftretenden Betriebsstörungen befinden sich weiterhin Fördergüter auf den Förderstrecken, die je nach Situation vor einer Wiederinbetriebnahme der Anlage entfernt werden müssen. In manchen Fällen kann es dazu kommen, dass zu wenige Fördergüter in bestimmten Förderabschnitten vorhanden sind, bspw. in einer Zuführung zu einem Verpackungsmodul, so dass es zu Verzögerungen im Betriebs- und Förderablauf kommen kann.

Um einerseits überzählige Fördergüter einlagern oder fehlende Fördergüter ohne störende Verzögerungen in einen Förderprozess einspeisen zu können, werden Speichereinrichtungen eingesetzt, die mit der Förderstrecke in permanenter Förderverbindung stehen und die eine bestimmte Menge an Fördergut aufnehmen können.

Eine bekannte Bauart von Gebinde- oder Artikelspeichern sieht entweder ein vertikales Puffersystem im Durchlauf oder einen von einer Seite bedienbaren Puffertisch in horizontaler Ausrichtung vor. Diese Systeme arbeiten meist auch mit einer Pulkbildung der jeweiligen Gebinde vor dem Überschub (horizontal) bzw. der Hubbewegung (vertikal). Die jeweilige Bewegung kann also nur bei einer bestimmten Anzahl von Gebinden erfolgen, da andernfalls Leerplätze entstehen, die später nicht mehr besetzt werden können. Zudem sind die vertikalen Speicher nicht oder nur nach einem entsprechenden Umbau in der Lage, verschiedene Gebindebreiten handzuhaben.

Eine Speichereinrichtung zum Speichern von entlang einer Förderstrecke zu einer Produktionsmaschine stetig hintereinander gefördertem Fördergut ist in der DE 103 12 695 B4 offenbart. Das Fördergut wird in derselben Reihenfolge, in der es in den Speicher hinein gefördert wurde, aus dem Speicher heraus gefördert, was einem "FiFo"-Prinzip ("First in - First out") entspricht. Die Speichereinrichtung weist eine Mehrzahl parallel zueinander angeordneter Speicherbahnen auf, die von umlaufend antreibbaren Förderketten gebildet werden. Jede der Speicherbahnen steht zum Befüllen mit einem ersten Antrieb und zum Entleeren mit einem zweiten Antrieb in Verbindung. Diese bekannte Speichereinrichtung dient insbesondere zum Speichern des Fördergutes bei einer Störung der Produktionsmaschine und zum anschließenden Zurückführen des gespeicherten Fördergutes nach Beseitigung der Störung.

Die EP 1 275 603 B1 offenbart eine weitere Speichervorrichtung, die einen entlang einer Förderebene verschiebbaren Schlitten mit Umlenkrollen zur Unterteilung eines endlosen Fördermittels in ein Speichertrum und ein Leertrum aufweist. Erste Umlenkrollen lenken das Leertrum aus der Förderebene in eine beabstandet dazu parallel verlaufende untere Ebene um. Zweite Umlenkrollen überführen das umgelenkte Leertrum wiederum in die andere Förderebene in das Speichertrum. Das Leertrum beansprucht aufgrund seines Verlaufs auf der Rückseite des Speichertrums wenig Platz.

Weitere Speichervorrichtungen bzw. Stauförderer sind aus der WO 2012/035280 A1 sowie aus der EP 2 184 240 B1 bekannt.

Eine Anordnung nach dem Oberbegriff des Anspruchs 1 und ein Verfahren nach dem Oberbegriff des Anspruchs 10 sind noch genauer aus der EP 2 184 240 B1 bekannt.

In der WO 2008/026478 A1 wird eine Fördervorrichtung zur Steigerung der Produktionseffizienz offenbart. Über eine Übergabestelle gelangen zu fördernde Artikel an ein Transportband, das zur Zwischenspeicherung von Artikeln dient. Dabei weist das Transportband eine erste Ebene und eine sich darunter befindende zweite Ebene auf. Über Umlenkmittel wird das Transportband von der ersten Ebene in die zweite Ebene überführt. Die erste Ebene ist in zwei Förderabschnitte aufgeteilt, welche parallel zueinander verlaufen und sich gegenläufig bewegen. Diese beiden Förderabschnitte sind über eine Umlenkvorrichtung miteinander verbunden, welche über ein Verstellelement verstellbar an einem Zugriemen angebracht ist. In der zweiten Ebene ist eine weitere Umlenkvorrichtung positioniert, die zusammen mit der Umlenkvorrichtung gegensinnig am Zugriemen verstellt werden kann.

Angesichts der aus dem Stand der Technik bekannten Speichereinrichtungen und Speicherverfahren besteht das wichtigste Ziel der Erfindung in der Verbesserung der Genauigkeit der Steuerung und der Reduzierung der Reaktionszeiten bei Verstellbewegungen der Speicherkapazität einer solchen Speichereinrichtung bzw. eines solchen Speicherverfahrens.

Dieses Ziel der Erfindung wird mit den Gegenständen der unabhängigen Ansprüche erreicht. Merkmale vorteilhafter Weiterbildungen der Erfindung lassen sich den abhängigen Ansprüchen sowie der weiteren Beschreibung entnehmen. Zur Erreichung des genannten Ziels schlägt die Erfindung eine Anordnung zweier oder mehrerer Speicherabschnitte zum Zwischenspeichern von Artikeln, Pack- oder Stückgütern einer Fördereinrichtung, vorzugsweise in einer Behälterabfüllanlage, zum kontinuierlichen oder diskontinuierlichen Fördern von Artikeln, Pack- oder Stückgütern mit den Merkmalen des unabhängigen Anspruchs 1 vor. Der Speicherabschnitt umfasst definitionsgemäß wenigstens ein in einer ersten Ebene befindliches Speichertrum und wenigstens ein damit verbundenes, in einer zweiten Ebene befindliches Leertrum. Normalerweise liegen diese beiden Ebenen jeweils in horizontaler Richtung und parallel zueinander, wobei die zweite Ebene, in der sich das Leertrum befindet, unterhalb der ersten Ebene angeordnet ist, in welcher das Speichertrum liegt. Das Speichertrum weist wenigstens zwei flexible, parallel innerhalb der ersten Ebene verlaufende und sich gegenläufig bewegende Auflage- und Förderabschnitte für zu zwischenspeichernde Artikel, Pack- oder Stückgüter auf, wobei diese Auflage- und Förderabschnitte durch einen ersten Umlenkabschnitt verbunden sind, der einen Kreisbogen von ungefähr 180 Grad beschreibt. Die gegenläufig bewegenden Auflage- und Förderabschnitte des Speichertrums befinden sich zwischen lokal definierten Übernahme- und Übergabestellen für die beförderten Artikel, Pack- oder Stückgüter von bzw. zu weiteren Horizontalförderabschnitten der Fördereinrichtung. Diese weiteren Horizontalförderabschnitte können entweder Förderverbindungen zu weiteren Maschinenteilen und Stationen oder wahlweise auch durch Verbindungsabschnitte gebildet sein, die Förderverbindungen zu weiteren gleichartigen oder ähnlich aufgebauten und funktionierenden Speicherabschnitten herstellen.

Dadurch, dass der erste Umlenkabschnitt die sich gegenläufig bewegenden Auflage- und Förderabschnitte an einer den Übernahme- und Übergabestellen gegenüber liegenden Stelle verbindet, ist ein in Draufsicht U-förmiger Verlauf des Speichertrums gebildet. Die zu speichernden Artikel, Pack- oder Fördergüter passieren die Übernahmestelle und treten dadurch in den Speicherabschnitt ein, werden in geradlinigem Verlauf im ersten Strang des sich in horizontaler Richtung bewegenden Auflage- und Förderabschnittes bis zum Umlenkabschnitt befördert, dort um ca. 180 Grad umgelenkt und über den zweiten Strang des sich parallel zum ersten Strang und gegenläufig zu diesem bewegenden Auflage- und Förderabschnittes zur Übergabestelle zurück befördert, die sich auf gleicher Höhe und in unmittelbarer Nähe zur Übernahmestelle befinden kann.

Wahlweise kann die Übergabestelle eine Verbindung zu weiteren Horizontalfördereinrichtungen aufweisen, über welche die Artikel, Pack- oder Fördergüter zu weiteren Handhabungs- und/oder Behandlungsstationen oder auch zu Verpackungsstationen o. dgl. befördert werden. Wie oben erwähnt, sind jedoch auch kaskadierte Anordnungen mehrerer Speicherabschnitte möglich, die ggf. nebeneinander und/oder parallel zueinander platziert sein können, wobei eine Übergabestelle eines ersten Speicherabschnittes über einen kurzen Verbindungsabschnitt - bspw. mit 180-Grad-Umlenkung - mit einer Übernahmestelle eines benachbarten Speicherabschnittes verbunden sein kann. Dieser Verbindungsabschnitt ist vorzugsweise ein herkömmlicher Förderer mit besonders vorzugsweise kurvenförmigem Teilstück und einem eigenen Antrieb. Dadurch ergeben sich nahezu beliebig wählbare, veränderbare und an verschiedene Maschinenumgebungen und -konfigurationen anpassbare Aufstellungsvarianten.

Wie oben bereits erwähnt, läuft das wenigstens eine Leertrum in der zweiten Ebene um, die sich unterhalb der ersten Ebene des Speichertrums befindet, wobei die Auflage- und Förderabschnitte des Speichertrums jeweils im Bereich der Übernahme- und Übergabestellen durch erste Umlenkmittel von der ersten Ebene in die zweite Ebene umgelenkt werden, und wobei die endlos umlaufenden Auflage- und Förderabschnitte im Bereich des Leertrums durch einen zweiten Umlenkabschnitt verbunden sind, der einen Kreisbogen von ungefähr 180 Grad beschreibt. Was hier als Umlenkmittel bezeichnet ist, sind normalerweise drehbare Umlenkrollen, die um horizontale Achsen drehbar gelagert sind. Da die endlos umlaufenden Auflage- und Förderabschnitte jedoch auch eines Antriebes bedürfen, können die erwähnten Umlenkmittel auch durch Antriebsrollen gebildet sein, die bspw. mit drehzahlsteuerbaren elektrischen Antriebsmotoren gekoppelt sein können. Sowohl die Umlenkmittel als auch die Umlenkabschnitte bilden in bevorzugter Ausführung jeweils Umlenkwinkel von ca. 180 Grad, wobei die Umlenkabschnitte den Auflage- und Förderabschnitten jeweils einen Kurvenverlauf innerhalb der horizontalen Ebenen aufprägen, in denen das Speichertrum wie auch das Leertrum jeweils umläuft, während die Umlenkmittel bzw. Umlenkrollen eine Umlenkung der Auflage- und Förderabschnitte von der ersten Ebene in die zweite Ebene bzw. umgekehrt schaffen, so dass dort die Oberfläche der Auflage- und Förderabschnitte jeweils einen gekrümmten Verlauf beschreibt.

Auch der zweite Umlenkabschnitt verbindet die sich gegenläufig bewegenden Auflage- und Förderabschnitte des Leertrums an einer den Übernahme- und Übergabestellen gegenüber liegenden Stelle, so dass je nach Betriebslage der erste und der zweite Umlenkabschnitt übereinander oder versetzt übereinander angeordnet sein können.

Erfindungsgemäß ist der erste Umlenkabschnitt des Speichertrums einem im Bereich der ersten Ebene geführten Obertrum eines zwischen wenigstens zwei zweiten Umlenkmitteln verstellbaren Endloszugmittels zugeordnet und mit diesem gekoppelt. Dagegen ist das Untertrum dieses Endloszugmittels im Bereich der zweiten Ebene geführt und dort mit dem zweiten Umlenkabschnitt des Leertrums gekoppelt. Der erste Umlenkabschnitt und der zweite Umlenkabschnitt sind durch Bewegungen des angetriebenen Endloszugmittels jeweils gegensinnig positionsveränderlich, so dass ein Speichervolumen des Speichertrums durch Positionsveränderungen des ersten Umlenkabschnittes und gegensinnige Positionsveränderungen des zweiten Umlenkabschnittes des Leertrums variabel einstellbar ist. Der erfindungsgemäße Speicherabschnitt weist somit nicht nur die endlos umlaufenden Auflage- und Förderabschnitte auf, deren Verlauf sich zwischen Speichertrum und Leertrum verteilt und je nach Länge des Speichertrums den aktuell verfügbaren Speicherbereich bzw. das aktuell verfügbare Speichervolumen zur Aufnahme von geförderten Artikeln, Pack- oder Stückgütern definiert, sondern darüber hinaus ein Endloszugmittel, bspw. ein Gliederband o. dgl., das in Zusammenwirkung mit dem endlos umlaufenden Auflage- und Förderabschnitten und dessen Umlenkabschnitten eine schnelle und sehr präzise Verstellung und Anpassung der Speichervolumina durch die gegensinnigen Positionsveränderungen der beiden in unterschiedlichen Höhen befindlichen Umlenkabschnitte und damit der verfügbaren Längen der geradlinig verlaufenden Bandabschnitte des Speichertrums und des Leertrums erlaubt.

Dieses Endloszugmittel verbindet demnach die beiden Umlenkabschnitte, wobei beidseitig an jedem Umlenkabschnitt das Endloszugmittel befestigt ist. Dabei deckt das Endloszugmittel vorzugsweise den durch die Bauform bedingten Zwischenraum ab. Dadurch ist ein sicherer Aufbau gewährleistet; in keiner Situation kann es zu unbeabsichtigten Verletzungen durch unvorsichtiges Eingreifen des Bedienpersonals kommen.

Sowohl das Leertrum als auch das Speichertrum können insbesondere durch ein gemeinsames, endlos umlaufendes flexibles Förderband, Gliederband o. dgl. gebildet sein, das im Bereich des Speichertrums einen stehenden oder liegenden Transport der zu befördernden und zwischenspeicherbaren Artikel, Pack- oder Stückgüter ermöglicht, während es im Leertrum leer zurückläuft, so dass das Leertrum lediglich als Ausgleichsabschnitt für den längenverstellbaren Bereich des Speichertrums benötigt wird. Um diese gewünschte Funktion in möglichst Platz sparender Weise zu liefern, ist die erste Ebene, in der das Speichertrum mit seinem ersten Umlenkabschnitt geführt ist, oberhalb der zweiten Ebene angeordnet, in der das Leertrum mit seinem zweiten Umlenkabschnitt geführt ist. Sinnvollerweise beschreiben die ersten und zweiten Umlenkabschnitte des Speichertrums bzw. des Leertrums jeweils einen Halbkreisbogen mit einer vertikalen Umlenkachse.

Eine sinnvolle Ausführungsvariante des erfindungsgemäßen Speicherabschnittes kann vorsehen, dass das zwischen den beiden zweiten Umlenkmitteln geführte Endloszugmittel durch ein flexibles Förderband, Gliederband, Jalousieband o. dgl. gebildet ist. Außerdem sind die zweiten Umlenkmittel vorzugsweise jeweils durch Umlenkrollen mit ungefähr horizontal liegenden Drehachsen gebildet, über die das Endloszugmittel geführt und ungefähr um 180 Grad umgelenkt ist. Zudem liegen die umlaufenden Auflage- und Förderabschnitte des Speichertrums mit ihren Unterseiten auf einer Außen- bzw. Oberseite des Obertrums des Endloszugmittels auf und sind dort gleitend geführt. Zudem können die umlaufenden Auflage- und Förderabschnitte des Leertrums mit ihren Unterseiten auf einer Außenseite bzw. einer nach unten weisenden Außenseite des Untertrums des Endloszugmittels aufliegen und dort gleitend geführt sein. Das Endloszugmittel bildet somit nicht nur einen Bestandteil eines exakt steuerbaren und sehr schnell beweglichen Steuermechanismus für die Justierung der Aufnahmekapazität des Speicherabschnittes, sondern bildet gleichermaßen einen Teil einer Tragkonstruktion zur Führung der Bandabschnitte der endlos umlaufenden Auflage- und Förderabschnitte, auf welchen die Artikel, Pack- oder Stückgüter im Bereich des Speichertrums geführt sind und befördert werden. Dabei kann wahlweise zumindest einer der zweiten Umlenkmittel eine Antriebseinrichtung zur Verstellung des Endloszugmittels zugeordnet sein.

Die Erfindung betrifft eine Anordnung zweier oder mehrerer solcher Speicherabschnitte, bei der eine Übergabestelle eines ersten Speicherabschnitts mit einer Übernahmestelle eines benachbarten weiteren Speicherabschnitts über einen als bogenförmig verlaufenden Verbindungsabschnitt ausgebildeten Horizontalförderabschnitt fördertechnisch gekoppelt ist. Wahlweise können hierbei drei oder mehr Speicherabschnitte jeweils über, als bogenförmig verlaufende Verbindungsabschnitte ausgebildete Horizontalförderabschnitte fördertechnisch gekoppelt sein. Erfindungsgemäß wird vorgesehen, dass zwei oder mehr derartige Speicherabschnitte jeweils mit parallel angeordneten Endloszugmitteln nebeneinander und in einer gemeinsamen Horizontalebene angeordnet sind, wobei die jeweiligen Endloszugmittel entweder über eine gemeinsame Antriebseinrichtung verstellbar sind oder jeweils über separate Antriebseinrichtungen zur Verstellung verfügen können. Grundsätzlich sind diese Anordnungen nahezu beliebig ausbau- und erweiterbar, ggf. auch über unterschiedliche Höhenniveaus, da die Verbindungsabschnitte wahlweise auch Steigungen und Gefälle überwinden können, sofern dies gewünscht ist. Damit können auch mehrere der erfindungsgemäßen Speicherabschnitte in unterschiedlichen Höhen übereinander und/oder nebeneinander angeordnet werden. Sinnvollerweise sind hierbei nur solche Endloszugmittel über gemeinsame Verstelleinrichtungen gekoppelt, bei denen zumindest an einer Seite fluchtende Umlenkmittel oder Umlenkrollen vorhanden sind.

Zur Erreichung des oben genannten Ziels umfasst die vorliegende Erfindung weiterhin ein Verfahren zum Zwischenspeichern von Artikeln, Pack- oder Stückgütern, die mittels einer Fördereinrichtung kontinuierlich oder diskontinuierlich gefördert werden. Bei diesem Verfahren werden zu speichernde Artikel, Pack- oder Stückgüter in einen Speicherabschnitt befördert, der wenigstens ein in einer ersten Ebene befindliches Speichertrum und wenigstens ein damit verbundenes, in einer zweiten Ebene befindliches Leertrum aufweist. Im Speichertrum laufen wenigstens zwei flexible, parallel innerhalb der ersten Ebene liegende und sich gegenläufig bewegende Auflage- und Förderabschnitte zur Aufnahme der zu zwischenspeichernden Artikel, Pack- oder Stückgüter um, wobei die Auflage- und Förderabschnitte durch einen ersten Umlenkabschnitt verbunden sind, der einen Kreisbogen von ungefähr 180 Grad beschreibt. Die sich gegenläufig bewegenden Auflage- und Förderabschnitte des Speichertrums sind mit lokal definierten Übernahme- und Übergabestellen verbunden, an denen die beförderten Artikel, Pack- oder Stückgüter von weiteren Horizontalförderabschnitten der Fördereinrichtung aufgenommen bzw. an solche abgegeben werden. Der erste Umlenkabschnitt verbindet die sich gegenläufig bewegenden Auflage- und Förderabschnitte an einer den Übernahme- und Übergabestellen gegenüber liegenden Stelle. Außerdem läuft das wenigstens eine Leertrum in der zweiten Ebene um, die sich unterhalb der ersten Ebene des Speichertrums befindet. Die Auflage- und Förderabschnitte des Speichertrums werden jeweils im Bereich der Übernahme- und Übergabestellen durch erste Umlenkmittel von der ersten Ebene in die zweite Ebene umgelenkt. Zudem sind die endlos umlaufenden Auflage- und Förderabschnitte im Bereich des Leertrums durch einen zweiten Umlenkabschnitt verbunden, der einen Kreisbogen von ungefähr 180 Grad beschreibt. Der zweite Umlenkabschnitt verbindet die sich gegenläufig bewegenden Auflage- und Förderabschnitte des Leertrums an einer den Übernahme- und Übergabestellen gegenüber liegenden Stelle. Der erste Umlenkabschnitt des Speichertrums ist einem im Bereich der ersten Ebene geführten Obertrum eines zwischen wenigstens zwei zweiten Umlenkmitteln verstellbaren Endloszugmittels zugeordnet und ist mit diesem gekoppelt. Das Untertrum des Endloszugmittels ist im Bereich der zweiten Ebene geführt und dort mit dem zweiten Umlenkabschnitt des Leertrums gekoppelt, wobei der erste Umlenkabschnitt und der zweite Umlenkabschnitt durch Bewegungen des angetriebenen Endloszugmittels jeweils gegensinnig in ihren Positionen verändert werden, so dass ein Speichervolumen des Speichertrums durch Positionsveränderungen des ersten Umlenkabschnittes und gegensinnige Positionsveränderungen des zweiten Umlenkabschnittes des Leertrums variabel verstellt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1a zeigt in zwei schematische Ansichten eine erste Ausführungsvariante eines Speicherabschnittes.
Fig. 1b zeigt einen Detailausschnitt der Draufsicht auf den Speicherabschnitt gemäß Fig. 1a.
Fig. 2a zeigt eine schematische Ansicht einer zweiten Ausführungsvariante der erfindungsgemäßen Anordnung zweier oder mehrerer Speicherabschnitte.
Fig. 2b zeigt eine alternative Variante des Speicherabschnittes gemäß Fig. 2a.
Fig. 2c zeigt einen Detailausschnitt der Draufsicht auf den Speicherabschnitt gemäß Fig. 2a.
Fig. 3 zeigt eine schematische Ansicht einer dritten Ausführungsvariante der erfindungsgemäßen Anordnung zweier oder mehrerer Speicherabschnitte.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

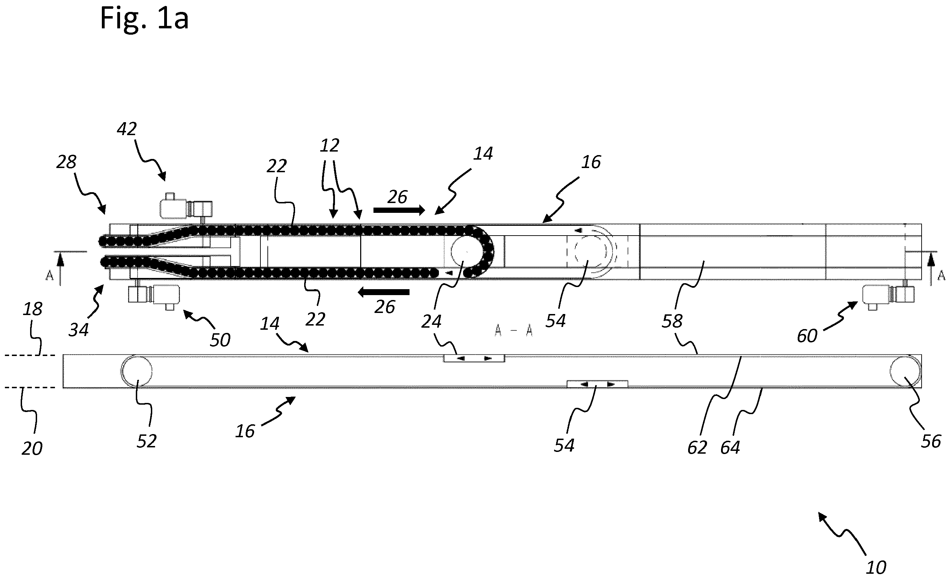

Die beiden schematischen Ansichten der Fig. 1a verdeutlichen eine erste Ausführungsvariante eines Speicherabschnittes 10 zum Zwischenspeichern von Artikeln, Pack- oder Stückgütern, der Bestandteil einer Fördereinrichtung zum kontinuierlichen oder diskontinuierlichen Fördern von Artikeln, Pack- oder Stückgütern ist. Die im Speicherabschnitt 10 beförderten und zwischengespeicherten Artikel, Pack- oder Stückgüter werden im folgenden Zusammenhang der Einfachheit halber nur noch als Artikel 12 bezeichnet, ohne dass dies in irgendeiner Weise als einschränkend verstanden werden soll.

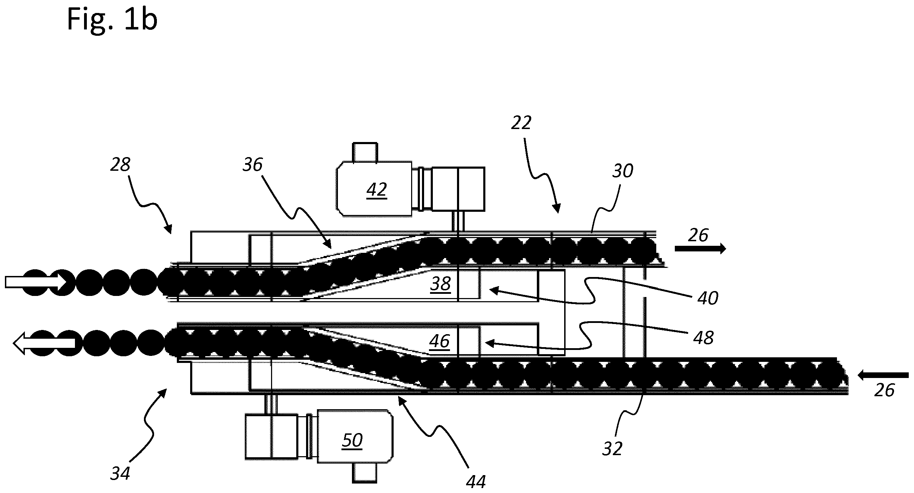

Die obere Ansicht der Fig. 1 a zeigt eine Draufsicht auf den Speicherabschnitt 10, während die darunter befindliche Ansicht einen Längsschnitt entlang der Schnittlinie A-A der oberen Draufsicht zeigt.

Die einfachste Ausführungsvariante des Speicherabschnittes 10 gemäß Fig. 1a umfasst ein Speichertrum 14 und ein Leertrum 16. Das Speichertrum 14 befindet sich in einer ersten Ebene 18 und das damit verbundene Leertrum 16 in einer zweiten Ebene 20. Wie in Fig. 1 deutlich zu erkennen, sind die beiden Ebenen 18 und 20 jeweils horizontal ausgerichtet und liegen parallel zueinander, wobei die zweite Ebene 20, in der sich das Leertrum 16 befindet, unterhalb der ersten Ebene 18 angeordnet ist, in welcher das Speichertrum 14 liegt.

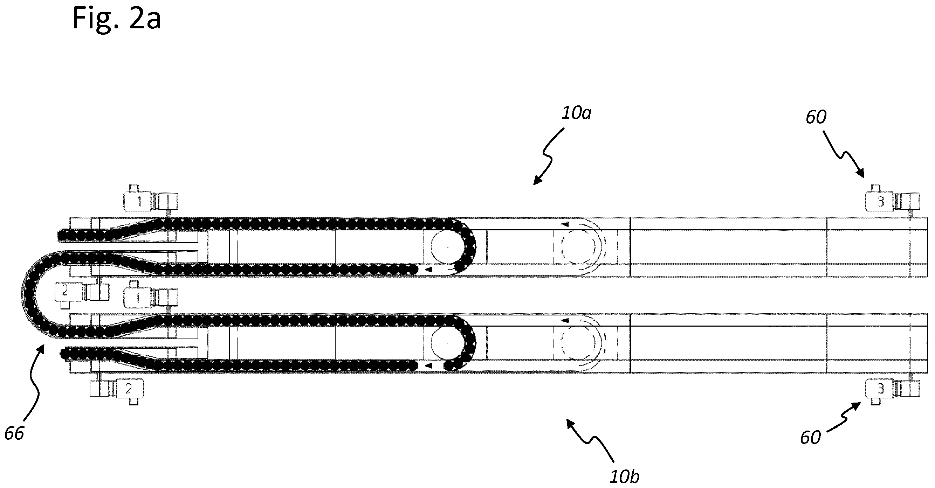

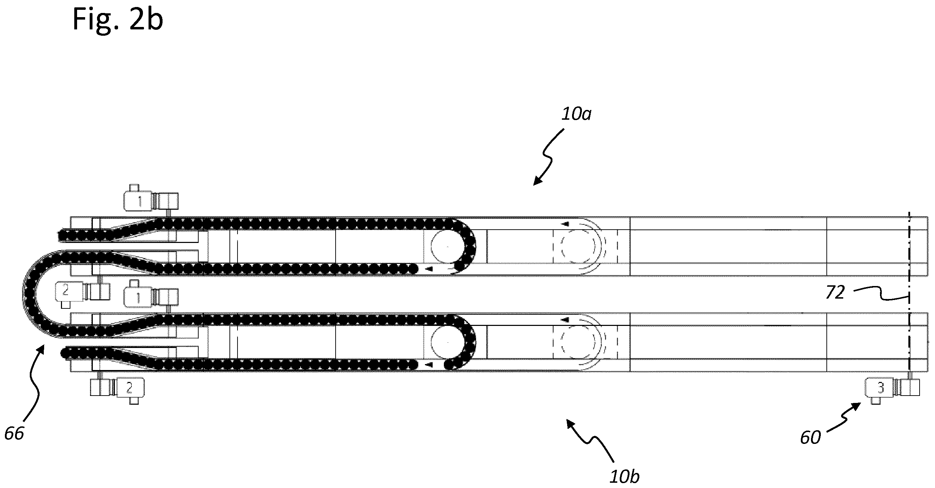

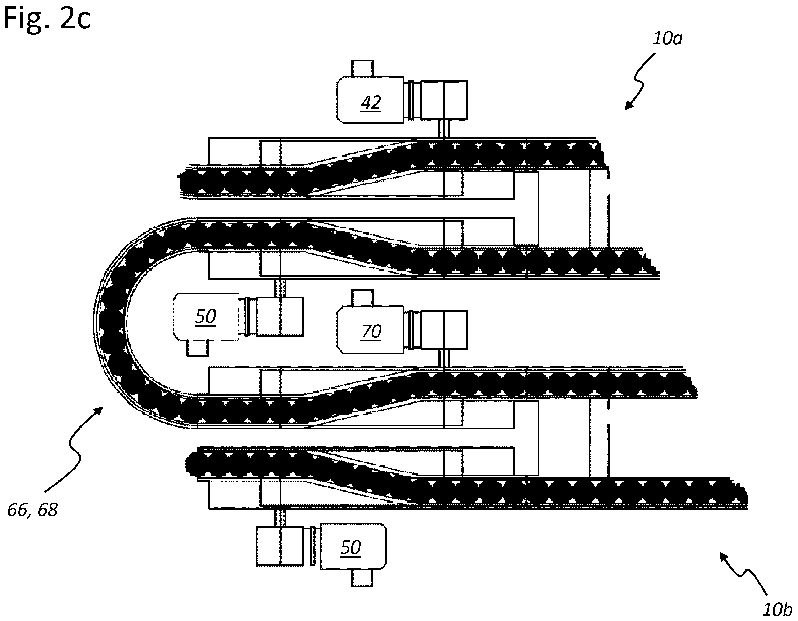

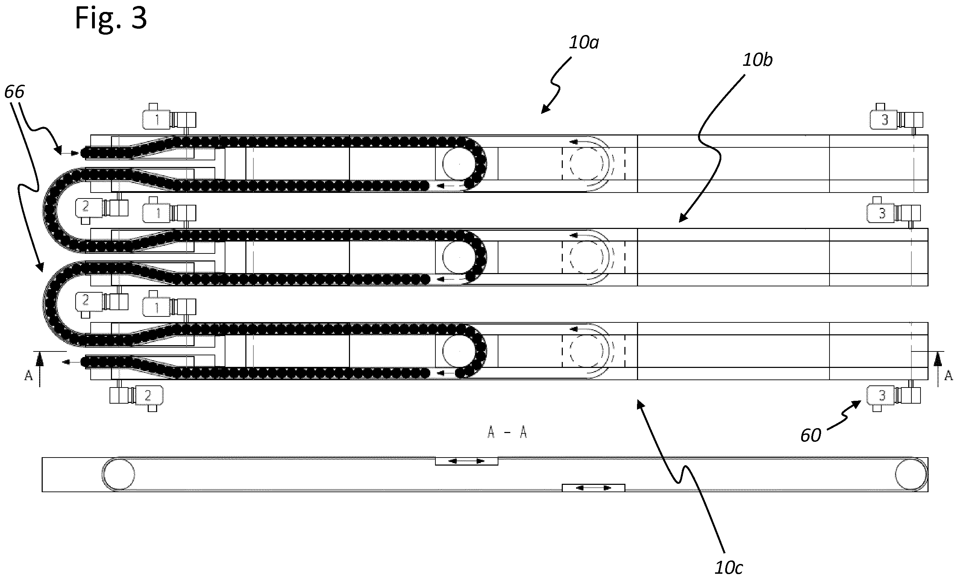

Das Speichertrum 14 weist zwei flexible, parallel innerhalb der ersten Ebene 18 verlaufende und sich gegenläufig bewegende Auflage- und Förderabschnitte 22 für die zu zwischenspeichernden Artikel 12 auf, die durch einen ersten Umlenkabschnitt 24 verbunden sind, der einen Kreisbogen von ungefähr 180 Grad beschreibt. Die sich gegenläufig in Förderrichtung 26 (siehe Pfeilrichtungen in Fig. 1a) bewegenden Auflage- und Förderabschnitte 22 des Speichertrums 14 sind ortsfesten Übernahme- und Übergabestellen für die beförderten Artikel 12 zugeordnet, die bspw. mit weiteren Horizontalförderabschnitten der Fördereinrichtung (nicht dargestellt) in Verbindung stehen können. Diese weiteren Horizontalförderabschnitte können entweder Förderverbindungen zu weiteren Maschinenteilen und Stationen oder wahlweise auch durch Verbindungsabschnitte gebildet sein, die Förderverbindungen zu weiteren gleichartigen oder ähnlich aufgebauten und funktionierenden Speicherabschnitten herstellen, wie dies in den Figuren 2 und 3 beispielhaft gezeigt ist. Die Ausgestaltung der Übernahme- und Übergabestellen ist in der Fig. 1b deutlicher erkennbar und wird anhand dieser Detailansicht näher erläutert.

Die Fig. 1a lässt deutlich den U-förmigen Verlauf des Speichertrums 14 erkennen, der durch die um 180 Grad umgelenkte Führung der sich gegenläufig in Förderrichtung 26 bewegenden Auflage- und Förderabschnitte 22 innerhalb der ersten Ebene 18 um den ersten Umlenkabschnitt 24 gebildet ist. Die zu speichernden Artikel 12 passieren die Übernahmestelle 28 (vgl. Fig. 1 b) und treten dadurch in den Speicherabschnitt 10 ein, werden in geradlinigem Verlauf in einem ersten Strang 30 des sich in horizontaler Richtung bewegenden Auflage- und Förderabschnittes 22 bis zum ersten Umlenkabschnitt 24 befördert, dort um ca. 180 Grad umgelenkt und über einen sich parallel und gegenläufig zum ersten Strang 28 in Förderrichtung 26 bewegenden zweiten Strang 32 zur Übergabestelle 34 zurück befördert, die sich im gezeigten Ausführungsbeispiel auf gleicher Höhe und in unmittelbarer Nähe zur Übernahmestelle 28 befindet.

Wie es die Fig. 1b verdeutlicht, ist zwischen der Übernahmestelle 28 und dem ersten Strang 30 des Auflage- und Förderabschnittes 22 eine erste Schrägumlenkung 36 angeordnet, die für eine Artikelführung von einem zuführenden Horizontalförderabschnitt 38 - gebildet bspw. durch ein endlos umlaufendes Zugmittel 40 wie ein Gliederband o. dgl. - zum ersten Strang 30 des sich im Speichertrum 14 in horizontaler erster Ebene 18 bewegenden Auflage- und Förderabschnittes 22 sorgt. Die Artikel 12 werden hierbei schräg über einen schmalen Längsspalt zwischen den beiden abschnittweise parallel und in selber horizontalem Niveau umlaufenden Zugmittel 40 und Auflage- und Förderabschnitt 22 geleitet. Dem Zugmittel 40 des zuführenden Horizontalförderabschnittes 38 ist ein erster Antriebsmotor 42 zugeordnet, der eine Antriebsrolle antreibt, über welche das Zugmittel 40 in 180-Grad-Umlenkung geführt ist. Weiterhin ist zwischen dem zweiten Strang 32 des Auflage- und Förderabschnittes 22 und der Übergabestelle 34 eine zweite Schrägumlenkung 44 angeordnet, die für eine Artikelführung vom zweiten Strang 32 zu einem abführenden Horizontalförderabschnitt 46 - gebildet bspw. durch ein weiteres endlos umlaufendes Zugmittel 48 wie ein Gliederband o. dgl. - sorgt. Die Artikel 12 werden hierbei wiederum schräg über einen schmalen Längsspalt zwischen den beiden abschnittweise parallel und in selber horizontalem Niveau umlaufenden Auflage- und Förderabschnitt 22 und Zugmittel 48 geleitet. Dem weiteren Zugmittel 48 des abführenden Horizontalförderabschnittes 46 kann ein weiterer Antriebsmotor zugeordnet sein, der jedoch an anderer, hier nicht gezeigter Umlenkstelle angeordnet sein kann.

Der in Fig. 1b erkennbare zweite Antriebsmotor 50 treibt eine Umlenkrolle, über die der endlos umlaufende Auflage- und Förderabschnitt 22 am Ende des zweiten Strangs 32 geführt und angetrieben ist. Typischerweise sorgen die ersten und zweiten Antriebsmotoren 42 und 50 für weitgehend synchron umlaufende Zugmittel 40 und Auflage- und Förderabschnitt 22, wobei der hier nicht gezeigte weitere Antriebsmotor zum Antrieb des weiteren Zugmittels 48 des abführenden Horizontalförderabschnittes 46 vorzugsweise ebenfalls für eine gleiche Bandgeschwindigkeit dieses Zugmittels 48 sorgen kann.

Die Übergabestelle 34 weist eine Verbindung zu weiteren, hier nicht dargestellten Horizontalfördereinrichtungen auf, über welche die aus dem Speicherabschnitt 10 beförderten Artikel 12 zu weiteren Handhabungs- und/oder Behandlungsstationen oder auch zu Verpackungsstationen o. dgl. befördert werden, die jedoch hier nicht dargestellt sind. Wie anhand der Figuren 2 und 3 näher verdeutlicht, sind Anordnungen mit mehreren miteinander gekoppelten Speicherabschnitten vorgesehen, die nebeneinander und/oder parallel zueinander platziert sein können, wobei eine Übergabestelle 34 eines ersten Speicherabschnittes über einen kurzen Verbindungsabschnitt - hier mit 180-Grad-Umlenkung - mit einer Übernahmestelle 28 eines benachbarten Speicherabschnittes verbunden ist.

Wie es der untere Längsschnitt der Fig. 1 a erkennen lässt, läuft das Leertrum 16 in der zweiten Ebene 20 um, die sich unterhalb der ersten Ebene 18 des Speichertrums 14 befindet, wobei die Auflage- und Förderabschnitte 22 des Speichertrums 14 jeweils im Bereich der Übernahme- und Übergabestellen 28 und 34 durch erste, um horizontale Achsen drehbare Umlenkrollen 52 von der ersten Ebene 18 in die zweite Ebene 20 umgelenkt werden. Zudem sind die endlos umlaufenden Auflage- und Förderabschnitte 22 im Bereich des Leertrums 16 durch einen zweiten Umlenkabschnitt 54 verbunden, der einen Kreisbogen von ungefähr 180 Grad beschreibt. Die in der unteren Längsschnittansicht der Fig. 1 a erkennbare erste Umlenkrolle 52 kann wahlweise mit dem zweiten Antriebsmotor 50 gekoppelt sein, der für den Antrieb der endlos umlaufenden Auflage- und Förderabschnitte 22 sorgen kann. Sowohl die Umlenkrollen 52 als auch die Umlenkabschnitte 24 und 54 bilden jeweils Umlenkwinkel von ca. 180 Grad, wobei die Umlenkabschnitte 24 und 54 den Auflage- und Förderabschnitten 22 jeweils einen Kurvenverlauf innerhalb der horizontalen Ebenen 18 bzw. 20 aufprägen, in denen das Speichertrum 14 wie auch das Leertrum 16 jeweils umläuft, während die Umlenkrollen 52 eine Umlenkung der Auflage- und Förderabschnitte 22 von der ersten Ebene 18 in die zweite Ebene 20 bzw. umgekehrt liefern.

Ein für die Erfindung wichtiger Bestandteil ist durch ein zwischen den ersten Umlenkrollen 52 und zweiten Umlenkrollen 56 geführtes und dort jeweils um 180 Grad umgelenktes Endloszugmittel 58 gebildet. Wie es die Fig. 1a (obere Draufsicht) erkennen lässt, ist den zweiten Umlenkrollen 56 ein dritter Antriebsmotor 60 zugeordnet, der das Endloszugmittel 58 antreiben und zwischen zwei Endlagen positionieren kann, die nachfolgend näher beschrieben werden. Ein Obertrum 62 des Endloszugmittels 58 definiert gleichzeitig die erste Ebene 18, in der sich das Speichertrum 14 befindet. Außerdem ist der erste Umlenkabschnitt 24 des Speichertrums 14 dem im Bereich der ersten Ebene 18 geführten Obertrum 62 des zwischen den ersten und zweiten Umlenkrollen 52 und 56 geführten und verstellbaren Endloszugmittels 58 zugeordnet bzw. dort befestigt. Weiterhin ist ein Untertrum 64 des Endloszugmittels 58 im Bereich der zweiten Ebene 20 geführt und dort mit dem zweiten Umlenkabschnitt 54 des Leertrums 16 gekoppelt. D.h., der zweite Umlenkabschnitt 54 des Leertrums 16 ist am Untertrum 64 des Endloszugmittels 58 befestigt. In der im unteren Längsschnitt der Fig. 1a erkennbaren Weise sind somit der erste Umlenkabschnitt 24 und der zweite Umlenkabschnitt 54 durch Bewegungen des mit dem dritten Antriebsmotor 60 variabel verstellbaren und angetriebenen Endloszugmittels 58 jeweils gegensinnig positionsveränderlich, so dass ein Speichervolumen des Speichertrums 14 durch die Positionsveränderungen des ersten Umlenkabschnittes 24 und die gegensinnigen Positionsveränderungen des zweiten Umlenkabschnittes 54 des Leertrums 16 variabel einstellbar ist. Durch die gekoppelten Bewegungen der beiden Umlenkabschnitte 24 und 54, die bei jeder Verstellbewegung des Endloszugmittels 58 jeweils gegensinnige Bewegungen um denselben Betrag ausführen, ist eine sehr exakt steuerbare Kapazitätsänderung des Speicherabschnittes 10 erreichbar. Da nicht nur der erste Umlenkabschnitt 24 die sich gegenläufig bewegenden Auflage- und Förderabschnitte 22 des Speichertrums 14 an einer den Übernahme- und Übergabestellen 28 und 34 gegenüber liegenden Stelle verbindet, sondern da auch der zweite Umlenkabschnitt 54 die sich gegenläufig bewegenden Auflage- und Förderabschnitte 22 des Leertrums 16 an einer den Übernahme- und Übergabestellen gegenüber liegenden Stelle verbindet, können je nach Betriebslage der erste 24 und der zweite Umlenkabschnitt 54 übereinander oder versetzt übereinander angeordnet sein.

Ebenso ist eine weitere Anordnung der Antriebe (nicht gezeigt) möglich. Anstelle des dritten Antriebsmotors 60 kann wahlweise ein alternativer Antrieb der Umlenkrolle 52 zugeordnet sein, der das Leertrum 16 wieder in Richtung Übernahmestelle 28 zieht. Durch die Zugkräfte an den beiden Umlenkrollen 52 stellt sich auf diese Weise eine resultierende Zugkraft zu den Umlenkabschnitten 24 und 54 ein, welche eine Positionierung und somit die Speicherkapazität einstellt. Die Umlenkabschnitte bei dieser Ausführungsform sind für sich betrachtet frei in beide Richtungen verschiebbar.

Sowohl das Leertrum 16 als auch das Speichertrum 14 sind durch ein gemeinsames, endlos umlaufendes flexibles Förderband, Gliederband o. dgl. gebildet, das im Bereich des Speichertrums 14 einen stehenden oder liegenden Transport der zu befördernden und zwischenspeicherbaren Artikel 12 ermöglicht, während es im Leertrum 16 leer zurückläuft, so dass das Leertrum 16 lediglich als Ausgleichsabschnitt für den längenverstellbaren Bereich des Speichertrums 14 benötigt wird. Um diese gewünschte Funktion in möglichst Platz sparender Weise zu liefern, ist die erste Ebene 18, in der das Speichertrum 14 mit seinem ersten Umlenkabschnitt 24 geführt ist, oberhalb der zweiten Ebene 20 angeordnet, in der das Leertrum 16 mit seinem zweiten Umlenkabschnitt 54 geführt ist.

Das zwischen den ersten und zweiten Umlenkrollen 52 und 56 geführte Endloszugmittel 58 kann insbesondere durch ein flexibles Förderband, Gliederband, Jalousieband o. dgl. gebildet sein. Die umlaufenden Auflage- und Förderabschnitte 22 des Speichertrums 14 liegen mit ihren Innen- bzw. Unterseiten auf einer Außen- bzw. Oberseite des Obertrums 62 des Endloszugmittels 58 auf und sind dort gleitend geführt. Die umlaufenden Auflage- und Förderabschnitte 22 des Leertrums 16 liegen mit ihren Innen- bzw. Unterseiten auf einer nach außen bzw. unten weisenden Seite des Untertrums 64 des Endloszugmittels 58 auf und sind dort ebenfalls gleitend geführt. Die ersten Umlenkrollen 52 liefern somit nicht nur die Umlenkung um 180 Grad für das Endloszugmittel 58 und dessen Führung, sondern gleichermaßen die weitgehend parallel verlaufende 180-Grad-Umlenkung für die gleitend auf dem Endloszugmittel 58 geführten Auflage- und Förderabschnitte 22 des Speichertrums 14 und des Leertrums 16, die somit durch ihre Auflage auf dem Endloszugmittel 58 ebenfalls durch die ersten Umlenkrollen 52 umgelenkt sind. Das Endloszugmittel 58 bildet somit nicht nur einen Bestandteil eines exakt steuerbaren und sehr schnell beweglichen Steuermechanismus für die Justierung der Aufnahmekapazität des Speicherabschnittes 10, sondern bildet gleichermaßen einen Teil einer Tragkonstruktion zur Führung der Bandabschnitte der endlos umlaufenden Auflage- und Förderabschnitte 22, auf welchen die Artikel 12 im Bereich des Speichertrums 14 geführt sind und befördert werden. Dabei kann wahlweise den zweiten Umlenkrollen eine Antriebseinrichtung in Gestalt des dritten Antriebsmotors 60 zur Verstellung des Endloszugmittels 58 und der damit gekoppelten Umlenkabschnitte 24 und 54 zugeordnet sein.

Wie es die Figuren 2a, 2b und 2c verdeutlichen, sind erfindungsgemäß zwei der in Fig. 1 gezeigten Speicherabschnitte 10 miteinander gekoppelt sein und auf diese Weise eine verdoppelte Speicherkapazität zur Verfügung stellen. Die beiden gekoppelten Speicherabschnitte 10 sind vorzugsweise nebeneinander und parallel zueinander platziert, wobei eine Übergabestelle 34 eines ersten Speicherabschnittes 10a über einen kurzen Verbindungsabschnitt 66, der eine 180-Grad-Umlenkung aufweist, mit einer Übernahmestelle 28 des benachbarten zweiten Speicherabschnittes 10b verbunden ist. Wie es die Detailansicht der Fig. 2c erkennen lässt, kann der Verbindungsabschnitt 66 durch ein Zugmittel 68 gebildet sein, das bspw. durch einen vierten Antriebsmotor 70 angetrieben ist. Vorzugsweise entspricht dieser Verbindungsabschnitt einem herkömmlichen Kurvenförderer, womit ein absolut modularer Aufbau erreicht werden kann. Wahlweise kann die Übergabestelle 34 des zweiten Speicherabschnittes 10b eine Verbindung zu weiteren, hier nicht dargestellten Horizontalfördereinrichtungen aufweisen, über welche die aus dem zweiten Speicherabschnitt 10b beförderten Artikel 12 zu weiteren Handhabungs- und/oder Behandlungsstationen oder auch zu Verpackungsstationen o. dgl. befördert werden, die jedoch hier nicht dargestellt sind.

Wie es die Fig. 2a erkennen lässt, sind den zweiten Umlenkrollen 56 der beiden Endloszugmittel 58 des ersten und des zweiten Speicherabschnittes 10a und 10b jeweils separate dritte Antriebsmotoren 60 zugeordnet, so dass individuelle und voneinander abweichende Verstellbewegungen der beiden Endloszugmittel 58 und damit voneinander abweichende Kapazitätsänderungen der beiden Speicherabschnitte 10a und 10b ermöglicht sind. Wahlweise können die beiden zweiten Umlenkrollen 56 der beiden Endloszugmittel 58 des ersten und des zweiten Speicherabschnittes 10a und 10b einem einzigen dritten Antriebsmotor 60 zugeordnet sein, der über eine Wellenverbindung 72 beide Endloszugmittel 58 synchron verstellen kann, so dass auf diese Weise nur gemeinsame und synchrone Verstellbewegungen der beiden Endloszugmittel 58 und damit gleich dimensionierte Kapazitätsänderungen der beiden Speicherabschnitte 10a und 10b ermöglicht sind.

Wie es die Figur 3 verdeutlicht, können wahlweise auch drei (oder mehr) der in Fig. 1 gezeigten Speicherabschnitte 10 miteinander gekoppelt sein und auf diese Weise eine verdreifachte (oder vervielfachte) Speicherkapazität zur Verfügung stellen. Die drei gekoppelten Speicherabschnitte 10a, 10b und 10c sind jeweils nebeneinander und parallel zueinander platziert, wobei eine Übergabestelle 34 eines ersten Speicherabschnittes 10a über einen kurzen Verbindungsabschnitt 66, der eine 180-Grad-Umlenkung aufweist, mit einer Übernahmestelle 28 des benachbarten zweiten Speicherabschnittes 10b verbunden ist, während eine Übergabestelle 34 des zweiten Speicherabschnittes 10b über einen weiteren kurzen Verbindungsabschnitt 66, der wiederum eine 180-Grad-Umlenkung aufweist, mit der Übernahmestelle 28 des benachbarten dritten Speicherabschnittes 10c verbunden ist. Entsprechend der Detailansicht der Fig. 2c können die Verbindungsabschnitte 66 jeweils durch Zugmittel 68 gebildet sein, die bspw. jeweils durch vierte Antriebsmotoren 70 angetrieben sind. Wahlweise kann die Übergabestelle 34 des dritten Speicherabschnittes 10c eine Verbindung zu weiteren, hier nicht dargestellten Horizontalfördereinrichtungen aufweisen, über welche die aus dem dritten Speicherabschnitt 10c beförderten Artikel 12 zu weiteren Handhabungs- und/oder Behandlungsstationen oder auch zu Verpackungsstationen o. dgl. befördert werden, die jedoch hier nicht dargestellt sind.

Wie es die Fig. 3 erkennen lässt, sind den zweiten Umlenkrollen 56 der Endloszugmittel 58 des ersten, des zweiten und des dritten Speicherabschnittes 10a, 10b und 10c jeweils separate dritte Antriebsmotoren 60 zugeordnet, so dass individuelle und voneinander abweichende Verstellbewegungen der drei Endloszugmittel 58 und damit voneinander abweichende Kapazitätsänderungen der Speicherabschnitte 10a, 10b und 10c ermöglicht sind. Wahlweise können die zweiten Umlenkrollen 56 der drei Endloszugmittel 58 des ersten, des zweiten und des dritten Speicherabschnittes 10a, 10b und 10c einem einzigen dritten Antriebsmotor 60 zugeordnet sein, der über eine Wellenverbindung 72 die Endloszugmittel 58 synchron verstellen kann, so dass auf diese Weise nur gemeinsame und synchrone Verstellbewegungen der drei Endloszugmittel 58 und damit gleich dimensionierte Kapazitätsänderungen der Speicherabschnitte 10a, 10b und 10c ermöglicht sind. Diese alternative Variante ist hier jedoch nicht dargestellt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Speicherabschnitt
- 10a: erster Speicherabschnitt
- 10b: zweiter Speicherabschnitt
- 10c: dritter Speicherabschnitt
- 12: Artikel
- 14: Speichertrum
- 16: Leertrum
- 18: erste Ebene, obere Ebene
- 20: zweite Ebene, untere Ebene
- 22: Auflage- und/oder Förderabschnitte
- 24: erster Umlenkabschnitt
- 26: Förderrichtung
- 28: Übernahmestelle
- 30: erster Strang
- 32: zweiter Strang
- 34: Übergabestelle
- 36: erste Schrägumlenkung
- 38: zuführender Horizontalförderabschnitt
- 40: Zugmittel
- 42: erster Antriebsmotor
- 44: zweite Schrägumlenkung
- 46: abführender Horizontalförderabschnitt
- 48: weiteres Zugmittel
- 50: zweiter Antriebsmotor
- 52: erste Umlenkrollen
- 54: zweiter Umlenkabschnitt
- 56: zweite Umlenkrollen
- 58: Endloszugmittel
- 60: dritter Antriebsmotor
- 62: Obertrum
- 64: Untertrum
- 66: Verbindungsabschnitt
- 68: Zugmittel
- 70: vierter Antriebsmotor
- 72: Wellenverbindung

## Patentansprüche

1. Anordnung zweier oder mehrerer Speicherabschnitte (10, 10a, 10b, 10c) zum Zwischenspeichern von Artikeln (12), Pack- oder Stückgütern einer Fördereinrichtung zum kontinuierlichen oder diskontinuierlichen Fördern von Artikeln (12), Pack- oder Stückgütern, welche Speicherabschnitte (10, 10a, 10b, 10c) jeweils wenigstens ein in einer ersten Ebene (18) befindliches Speichertrum (14) und jeweils wenigstens ein damit verbundenes, in einer zweiten Ebene (20) befindliches Leertrum (16) aufweisen,
- wobei das jeweilige Speichertrum (14) wenigstens zwei flexible, parallel innerhalb der ersten Ebene (18) verlaufende und sich gegenläufig bewegende Auflage- und Förderabschnitte (22) für zu zwischenspeichernde Artikel (12), Pack- oder Stückgüter aufweist, welche Auflage- und Förderabschnitte (22) durch einen ersten Umlenkabschnitt (24) verbunden sind, der einen Kreisbogen von ungefähr 180 Grad beschreibt,
- wobei sich die gegenläufig bewegenden Auflage- und Förderabschnitte (22) des jeweiligen Speichertrums (14) zwischen lokal definierten Übernahme- und Übergabestellen (28; 34) für die beförderten Artikel (12), Pack- oder Stückgüter von bzw. zu weiteren Horizontalförderabschnitten der Fördereinrichtung befinden,
- wobei der erste Umlenkabschnitt (24) die sich gegenläufig bewegenden Auflage- und Förderabschnitte (22) an einer den Übernahme- und Übergabestellen (28; 34) gegenüber liegenden Stelle verbindet,
- wobei das wenigstens eine jeweilige Leertrum (16) in der zweiten Ebene (20) umläuft, die sich unterhalb der ersten Ebene (18) des jeweiligen Speichertrums (14) befindet, wobei die Auflage- und Förderabschnitte (22) des jeweiligen Speichertrums (14) jeweils im Bereich der Übernahme- und Übergabestellen (28; 34) durch erste Umlenkmittel von der ersten Ebene (18) in die zweite Ebene (20) umgelenkt werden, und wobei die endlos umlaufenden Auflage- und Förderabschnitte (22) im Bereich des jeweiligen Leertrums (16) durch einen zweiten Umlenkabschnitt (54) verbunden sind, der einen Kreisbogen von ungefähr 180 Grad beschreibt,
- wobei der zweite Umlenkabschnitt (54) die sich gegenläufig bewegenden Auflage- und Förderabschnitte (22) des jeweiligen Leertrums (16) an einer den Übernahme- und Übergabestellen (28; 34) gegenüber liegenden Stelle verbindet,
- wobei der erste Umlenkabschnitt (24) des jeweiligen Speichertrums (14) einem im Bereich der ersten Ebene (18) geführten Obertrum (62) eines zwischen wenigstens zwei zweiten Umlenkmitteln (52, 56) verstellbaren Endloszugmittels (58) zugeordnet und mit diesem gekoppelt ist, dessen Untertrum (64) im Bereich der zweiten Ebene (20) geführt ist und dort mit dem zweiten Umlenkabschnitt (54) des jeweiligen Leertrums (16) gekoppelt ist,
- wobei der erste Umlenkabschnitt (24) und der zweite Umlenkabschnitt (54) durch Bewegungen des angetriebenen Endloszugmittels (58) jeweils gegensinnig positionsveränderlich sind, so dass ein Speichervolumen des jeweiligen Speichertrums (14) durch Positionsveränderungen des ersten Umlenkabschnittes (24) und gegensinnige Positionsveränderungen des zweiten Umlenkabschnittes (54) des jeweiligen Leertrums (16) variabel einstellbar ist,
- wobei die zwei oder mehr Speicherabschnitte (10; 10a, 10b, 10c) so angeordnet sind, dass eine Übergabestelle (34) des ersten Speicherabschnitts (10a) mit einer Übernahmestelle (28) des benachbarten weiteren Speicherabschnitts (10b; 10c) jeweils über einen als bogenförmig verlaufenden Verbindungsabschnitt (66) ausgebildeten Horizontalförderabschnitt fördertechnisch gekoppelt ist,
- wobei die zwei oder mehr Speicherabschnitte (10; 10a, 10b, 10c) jeweils mit parallel angeordneten Endloszugmitteln (58) nebeneinander und in einer gemeinsamen Horizontalebene angeordnet sind, welche Endloszugmittel (58) über eine gemeinsame Antriebseinrichtung (60) verstellbar sind, oder welche Endloszugmittel (58) jeweils über separate Antriebseinrichtungen (60) zur Verstellung verfügen, und wobei die Endloszugmittel (58) jeweils den ersten und zweiten Umlenkabschnitt (24, 54) verbinden, **dadurch gekennzeichnet, dass** die Endloszugmittel (58) jeweils beidseitig an jedem Umlenkabschnitt (24, 54) befestigt sind, und dass die Endloszugmittel (58) jeweils den Zwischenraum zwischen dem ersten und zweiten Umlenkabschnitt (24, 54) abdecken, und dass die umlaufenden Auflage- und Förderabschnitte (22) des jeweiligen Speichertrums (14) mit ihren Innen- bzw. Unterseiten auf einer Außen- bzw. Oberseite des Obertrums (62) der jeweiligen Endloszugmittel (58) aufliegen und dort gleitend geführt sind.

2. Anordnung zweier oder mehrerer Speicherabschnitte nach Anspruch 1, bei dem Leertrum (16) und Speichertrum (14) durch ein gemeinsames, endlos umlaufendes flexibles Förderband, Gliederband o. dgl. gebildet sind.

3. Anordnung zweier oder mehrerer Speicherabschnitte nach Anspruch 1 oder 2, bei dem die erste Ebene (18), in der das jeweilige Speichertrum (14) mit seinem ersten Umlenkabschnitt (24) geführt ist, oberhalb der zweiten Ebene (20) angeordnet ist, in der das jeweilige Leertrum (16) mit seinem zweiten Umlenkabschnitt (54) geführt ist.

4. Anordnung zweier oder mehrerer Speicherabschnitte nach einem der Ansprüche 1 bis 3, bei dem die ersten und zweiten Umlenkabschnitte (24; 54) des jeweiligen Speichertrums (14) bzw. des jeweiligen Leertrums (16) jeweils einen Halbkreisbogen mit einer vertikalen Umlenkachse beschreiben.

5. Anordnung zweier oder mehrerer Speicherabschnitte nach einem der Ansprüche 1 bis 4, bei dem das zwischen den beiden zweiten Umlenkmitteln (52, 56) geführte Endloszugmittel (58) durch ein flexibles Förderband, Gliederband, Jalousieband o. dgl. gebildet ist.

6. Anordnung zweier oder mehrerer Speicherabschnitte nach Anspruch 5, bei dem die zweiten Umlenkmittel jeweils durch Umlenkrollen (52, 56) mit ungefähr horizontal liegenden Drehachsen gebildet sind, über die das Endloszugmittel (58) geführt und ungefähr um 180 Grad umgelenkt ist.

7. Anordnung zweier oder mehrerer Speicherabschnitte nach einem der Ansprüche 1 bis 6, bei dem die umlaufenden Auflage- und Förderabschnitte (22) des jeweiligen Leertrums (14) mit ihren Innen- oder Unterseiten auf einer Außenseite oder einer nach oben weisenden Außenseite des Untertrums (64) des Endloszugmittels (58) auf- bzw. anliegen und dort gleitend geführt sind.

8. Anordnung zweier oder mehrerer Speicherabschnitte nach einem der Ansprüche 1 bis 7, bei dem zumindest einer der zweiten Umlenkmittel (52, 56) eine Antriebseinrichtung (60) zur Verstellung des Endloszugmittels zugeordnet ist.

9. Anordnung zweier oder mehrerer Speicherabschnitte gemäß einem der Ansprüche 1 bis 8, bei welcher drei oder mehr Speicherabschnitte (10; 10a, 10b, 10c) jeweils über, als bogenförmig verlaufende Verbindungsabschnitte (66) ausgebildete Horizontalförderabschnitte fördertechnisch gekoppelt sind.

10. Verfahren zum Zwischenspeichern von Artikeln (12), Pack- oder Stückgütern, die mittels einer Fördereinrichtung kontinuierlich oder diskontinuierlich gefördert werden, bei dem zu speichernde Artikel (12), Pack- oder Stückgüter in einer Anordnung zweier oder mehrerer Speicherabschnitte (10; 10a, 10b, 10c) befördert werden, welche jeweils wenigstens ein in einer ersten Ebene (18) befindliches Speichertrum (14) und jeweils wenigstens ein damit verbundenes, in einer zweiten Ebene (20) befindliches Leertrum (16) aufweisen,
- wobei im jeweiligen Speichertrum (14) wenigstens zwei flexible, parallel innerhalb der ersten Ebene (18) liegende und sich gegenläufig bewegende Auflage- und Förderabschnitte (22) zur Aufnahme der zu zwischenspeichernden Artikel (12), Pack- oder Stückgüter umlaufen, wobei die Auflage- und Förderabschnitte (22) durch einen ersten Umlenkabschnitt (24) verbunden sind, der einen Kreisbogen von ungefähr 180 Grad beschreibt,
- wobei die sich gegenläufig bewegenden Auflage- und Förderabschnitte (22) des jeweiligen Speichertrums (14) mit lokal definierten Übernahme- und Übergabestellen (28; 34) verbunden sind, an denen die beförderten Artikel (12), Pack- oder Stückgüter von weiteren Horizontalförderabschnitten der Fördereinrichtung aufgenommen bzw. an solche abgegeben werden,
- wobei der erste Umlenkabschnitt (24) die sich gegenläufig bewegenden Auflage- und Förderabschnitte (22) an einer den Übernahme- und Übergabestellen (28, 34) gegenüber liegenden Stelle verbindet,
- wobei das wenigstens eine jeweilige Leertrum (16) in der zweiten Ebene (20) umläuft, die sich unterhalb der ersten Ebene (18) des jeweiligen Speichertrums (14) befindet, wobei die Auflage- und Förderabschnitte (22) des jeweiligen Speichertrums (14) jeweils im Bereich der Übernahme- und Übergabestellen (28, 34) durch erste Umlenkmittel von der ersten Ebene (18) in die zweite Ebene (20) umgelenkt werden, und wobei die endlos umlaufenden Auflage- und Förderabschnitte (22) im Bereich des jeweiligen Leertrums (16) durch einen zweiten Umlenkabschnitt (54) verbunden sind, der einen Kreisbogen von ungefähr 180 Grad beschreibt,
- wobei der zweite Umlenkabschnitt (54) die sich gegenläufig bewegenden Auflage- und Förderabschnitte (22) des jeweiligen Leertrums (16) an einer den Übernahme- und Übergabestellen (28, 34) gegenüber liegenden Stelle verbindet,
- wobei der erste Umlenkabschnitt (24) des jeweiligen Speichertrums (14) einem im Bereich der ersten Ebene (18) geführten Obertrum (62) eines zwischen wenigstens zwei zweiten Umlenkmitteln (52, 56) verstellbaren Endloszugmittels (58) zugeordnet und mit diesem gekoppelt ist, dessen Untertrum (64) im Bereich der zweiten Ebene (20) geführt ist und dort mit dem zweiten Umlenkabschnitt (54) des jeweiligen Leertrums (16) gekoppelt ist,
- wobei der erste Umlenkabschnitt (24) und der zweite Umlenkabschnitt (54) durch Bewegungen des angetriebenen Endloszugmittels (58) jeweils gegensinnig in ihren Positionen verändert werden, so dass ein Speichervolumen des jeweiligen Speichertrums (14) durch Positionsveränderungen des ersten Umlenkabschnittes (24) und gegensinnige Positionsveränderungen des zweiten Umlenkabschnittes (54) des jeweiligen Leertrums (16) variabel verstellt wird,
- wobei die zwei oder mehr Speicherabschnitte (10; 10a, 10b, 10c) so angeordnet sind, dass eine Übergabestelle (34) des ersten Speicherabschnitts (10a) mit einer Übernahmestelle (28) des benachbarten weiteren Speicherabschnitts (10b; 10c) jeweils über einen als bogenförmig verlaufenden Verbindungsabschnitt (66) ausgebildeten Horizontalförderabschnitt fördertechnisch gekoppelt ist,
- wobei die zwei oder mehr Speicherabschnitte (10; 10a, 10b, 10c) jeweils mit parallel angeordneten Endloszugmitteln (58) nebeneinander und in einer gemeinsamen Horizontalebene angeordnet sind, welche Endloszugmittel (58) über eine gemeinsame Antriebseinrichtung (60) verstellbar sind, oder welche Endloszugmittels (58) jeweils über separate Antriebseinrichtungen (60) zur Verstellung verfügen, und wobei die Endloszugmittel (58) jeweils den ersten und zweiten Umlenkabschnitt (24, 54) verbinden, **dadurch gekennzeichnet, dass** die Endloszugmittel (58) jeweils beidseitig an jedem Umlenkabschnitt (24, 54) befestigt sind, und dass die Endloszugmittel (58) jeweils den Zwischenraum zwischen dem ersten und zweiten Umlenkabschnitt (24, 54) abdecken, und dass die umlaufenden Auflage- und Förderabschnitte (22) des jeweiligen Speichertrums (14) mit ihren Innen- bzw. Unterseiten auf einer Außen- bzw. Oberseite des Obertrums (62) der jeweiligen Endloszugmittel (58) aufliegen und dort gleitend geführt sind.

## Claims

1. Arrangement of two or more storage sections (10, 10a, 10b, 10c) for intermediate storage of articles (12), packaged or piece goods for a conveyor device for the continuous or intermittent transport of articles (12), packaged or piece goods, which storage sections (10, 10a, 10b, 10c) each have at least one storage span (14) on a first level (18) and each have at least one empty span (16) connected with it on a second level (20),
- wherein the respective storage span (14) has at least two flexible loading and transport sections (22) for the intermediate storage of articles (12), packaged or piece goods that run parallel to one another in opposite directions on the first level (18), which loading and transport sections (22) are connected by a first diversion section (24) describing a circular arc of approximately 180°,
- wherein the loading and transport sections (22) of the respective storage span (14), which move in opposite directions, are located between locally defined receiving and transfer points (28; 34) for the articles (12), packaged or piece goods being transported from or to additional horizontal transport sections of the conveyor device,
- wherein the first diversion section (24) connects the loading and transport sections (22) that move in opposite directions at a point opposite the receiving and transfer points (28; 34),
- wherein the at least one respective empty span (16) circulates in the second level (20), which is located beneath the first level (18) of the respective storage span (14), wherein the loading and transport sections (22) of the respective storage span (14) each being diverted in the area of the receiving and transfer points (28; 34) by first diverting means from the first level (18) to the second level (20), and wherein the endlessly circulating loading and transport sections (22) being connected in the area of the respective empty span (16) by a second diversion section (54) that describes a circular arc of approximately 180°,
- wherein the second diversion section (54) connects the loading and transport sections (22) of the respective empty span (16) that move in opposite directions at a point opposite the receiving and transfer points (28; 34),
- wherein the first diversion section (24) of the respective storage span (14) corresponds to, and is coupled with, an upper span (62) of an endless traction means (58) adjustable between at least two second diversion means (52, 56) running in the area of the first level (18), the lower span (64) of which runs in the area of the second level (20) and is coupled there with the second diversion section (54) of the respective empty span (16),
- wherein the position of the first diversion section (24) and the second diversion section (54) can be adjusted in opposite directions by means of movements of the driven endless traction means (58), such that a storage volume of the respective storage span (14) can be variably adjusted by position changes of the first diversion section (24) and position changes of the second diversion section (54) of the respective empty span (16) in the opposite direction,
- wherein the two or more storage sections (10, 10a, 10b, 10c) are arranged such that a transfer point (34) of the first storage section (10a) is, in terms of conveyance, coupled with a receiving point (28) of another, adjacent storage section (10b, 10c), each via a horizontal transport section formed as an arcuate connection section (66),
- wherein the two or more storage sections (10, 10a, 10b, 10c) each are arranged adjacent to one another and in a common horizontal plane with parallel endless traction means (58), which endless traction means (58) are adjustable via a common drive system (60), or, which endless traction means (58) each have separate drive systems (60) for adjustment, and wherein the endless traction means (58) each connect the first and second diversion section (24, 54), **characterized in that** the endless traction means (58) are each fixed at both ends on each diversion section (24, 54), and that the endless traction means (58) each cover the spacing between the first and the second diversion section (24, 54), and that the circulating loading and transfer sections (22) of the respective storage span (14) lie with their inner and/or bottom sides on an outer and/or upper side of the upper span (62) of the respective endless traction means (58) and slide over them.

2. Arrangement of two more storage sections as recited in claim 1, wherein the empty span (16) and the storage span (14) are formed by a common, endlessly circulating, flexible conveyor belt, link belt or the like.

3. Arrangement of two or more storage sections as recited in claim 1 or 2, wherein the first level (18), in which the respective storage span (14) with its first diversion section (24) is guided, is arranged above the second level (20), in which the respective empty span (16) with its second diversion section (54) is guided.

4. Arrangement of two or more storage sections as recited in one of claims 1 to 3, wherein the first and second diversion sections (24, 54) of the respective storage span (14) and/or of the respective empty span (16) each describe a semicircular arc with a vertical diversion axis.

5. Arrangement of two or more storage sections as recited in one of claims 1 to 4, wherein the endless traction means (58) running between the two second diverting means (52, 56) is formed by a flexible conveyor belt, link belt, a strap or the like.

6. Arrangement of two or more storage sections as recited in claim 5, wherein the second diverting means are each formed by guide pulleys (52, 56) with approximately horizontal rotational axes, via which the endless traction means (58) is guided and diverted by approximately 180°.

7. Arrangement of two or more storage sections as recited in one of claims 1 to 6, wherein the inner or bottom sides of the circulating loading and transport sections (22) of the respective empty span (16) lie on an outer or upper side of the lower span (64) of the endless traction means (58), and are slidingly guided over them.

8. Arrangement of two or more storage sections as recited in one of claims 1 to 7, wherein a drive system (60) is assigned to at least one of the second diverting means (52, 56) to adjust the endless traction means.

9. Arrangement of two or more storage sections as recited in one of claims 1 to 8, wherein three or more storage sections (10, 10a, 10b, 10c) are each, in terms of conveyance, coupled via horizontal transport sections formed as arcuate connection sections (66).

10. Method for intermediate storage of articles (12), packaged or piece goods being transported continuously or intermittently by a conveyor device, where the articles (12), packaged or piece goods to be stored are transported within an arrangement of two or more storage sections (10, 10a, 10b, 10c) having at least one storage span (14) on a first level (18) and at least one empty span (16) on a second level (20), which is connected with it,
- wherein the respective storage span (14) has at least two flexible, loading and transport sections (22) that run parallel to one another in opposite directions on the first level (18) to receive the articles (12), packaged or piece goods for intermediate storage, wherein the loading and transport sections (22) are connected by a first diversion section (24) describing a circular arc of approximately 180°,
- wherein the loading and transport sections (22) of the respective storage span (14), which move in opposite directions, are connected with locally defined receiving and transfer points (28; 34), at which the articles (12), packaged or piece goods to be transported are received from and/or transferred to additional horizontal transport sections of the conveyor device,
- wherein the first diversion section (24) connects the loading and transport sections (22) that move in opposite directions at a point opposite the receiving and transfer points (28, 34),
- wherein the at least one respective empty span (16) circulates in the second level (20), beneath the first level (18) of the respective storage span (14), wherein the loading and transport sections (22) of the respective storage span (14) each being diverted in the area of the receiving and transfer points (28, 34) by first diverting means from the first level (18) to the second level (20), and wherein the endlessly circulating loading and transport sections (22) being connected in the area of the respective empty span (16) by a second diversion section (54) that describes a circular arc of approximately 180°,
- wherein the second diversion section (54) connects the loading and transport sections (22) of the respective empty span (16) that move in opposite directions at a point opposite the receiving and transfer points (28, 34),
- wherein the first diversion section (24) of the respective storage span (14) corresponds to, and is coupled with, an upper span (62) of an endless traction means (58) adjustable between at least two second diverting means (52, 56) running in the area of the first level (18), the lower span (64) of which runs in the area of the second level (20) and is coupled there with the second diversion section (54) of the respective empty span,
- wherein the position of the first diversion section (24) and the second diversion section (54) are being adjusted in opposite directions by means of movements of the driven endless traction means (58), such that a storage volume of the respective storage span (14) is variably adjusted by position changes of the first diversion section (24) and position changes of the second diversion section (54) of the respective empty span (16) in the opposite direction,
- wherein the two or more storage sections (10, 10a, 10b, 10c) are arranged such that a transfer point (34) of the first storage section (10a) is coupled, in terms of conveyance, with a receiving point (28) of another, adjacent storage section (10b, 10c) each via a horizontal transport section formed as an arcuate connection section (66),
- wherein the two or more storage sections (10, 10a, 10b, 10c) each are arranged adjacent to one another and in a common horizontal plane with parallel endless traction means (58), which endless traction means (58) are adjustable via a common drive system (60), or, which endless traction means (58) each have separate drive systems (60) for adjustment, and wherein the endless traction means (58) each connect the first and second diversion section (24, 54), **characterized in that** the endless traction means (58) are each fixed at both ends on each diversion section (24, 54), and that the endless traction means (58) each cover the spacing between the first and the second diversion section (24, 54), and that the circulating loading and transfer sections (22) of the respective storage span (14) lie with their inner and/or bottom sides on an outer and/or upper side of the upper span (62) of the respective endless traction means (58) and slide over them.

## Revendications

1. Ensemble de deux ou plusieurs sections de stockage (10, 10a, 10b, 10c) pour le stockage intermédiaire d'articles (12), de produits emballés ou de détail d'un dispositif de convoyage destiné à transporter de manière continue ou discontinue des articles (12), produits emballés ou de détail, lesquelles sections de stockage (10, 10a, 10b, 10c) présentent chacune au moins un brin de stockage (14) situé dans un premier plan (18) et chacune au moins un brin lâche (16) relié à celui-ci et situé dans un deuxième plan (20),
- dans lequel le brin de stockage (14) respectif présente au moins deux sections flexibles d'appui et de transport (22) pour des articles (12), produits emballés ou de détail à stocker temporairement, qui s'étendent parallèlement à l'intérieur du premier plan (18) et se déplacent en sens opposé, lesquelles sections d'appui et de transport (22) sont reliées par une première section de renvoi (24) qui décrit un arc de cercle de 180 degrés à peu près,
- dans lequel les sections d'appui et de transport (22) du brin de stockage (14) respectif, qui se déplacent en sens opposé, sont situées entre des points de reprise et de transfert (28; 34) localement définis pour les articles (12), produits emballés ou de détail transportés, depuis ou bien vers d'autres sections de transport horizontales du dispositif de convoyage,
- dans lequel ladite première section de renvoi (24) relie les sections d'appui et de transport (22) se déplaçant en sens opposé, sur un point qui est situé en regard des points de reprise et de transfert (28; 34),
- dans lequel ledit au moins un brin lâche (16) respectif circule dans le deuxième plan (20) qui est situé au-dessous du premier plan (18) du brin de stockage (14) respectif, dans lequel les sections d'appui et de transport (22) du brin de stockage (14) respectif sont déviées chacune au niveau des points de reprise et de transfert (28; 34), par des premiers moyens de renvoi, depuis le premier plan (18) dans le deuxième plan (20), et dans lequel les sections d'appui et de transport (22) circulant sans fin sont reliées au niveau du brin lâche (16) respectif par une deuxième section de renvoi (54) qui décrit un arc de cercle de 180 degrés à peu près,
- dans lequel la deuxième section de renvoi (54) relie les sections d'appui et de transport (22) se déplaçant en sens opposé du brin lâche (16) respectif, sur un point qui est situé en regard des points de reprise et de transfert (28; 34),
- dans lequel la première section de renvoi (24) du brin de stockage (14) respectif est associée à un brin supérieur (62), guidé au niveau du premier plan (18), d'un moyen de traction sans fin (58) réglable entre au moins deux deuxièmes moyens de renvoi (52, 56), et est couplée à celui-ci, moyen de traction sans fin (58) dont le brin inférieur (64) est guidé au niveau du deuxième plan (20) et y est couplé à la deuxième section de renvoi (54) du brin lâche (16) respectif,
- dans lequel la première section de renvoi (24) et la deuxième section de renvoi (54) sont chacune modifiables en position en sens opposé par des mouvements du moyen de traction sans fin (58) entraîné, de sorte qu'un volume de stockage du brin de stockage (14) respectif est réglable de manière variable par des changements de position de la première section de renvoi (24) et des changements de position opposés de la deuxième section de renvoi (54) du brin lâche (16) respectif,
- dans lequel lesdites deux ou plusieurs sections de stockage (10; 10a, 10b, 10c) sont disposées de telle manière qu'un point de transfert (34) de la première section de stockage (10a) est couplé en termes de convoyage à un point de reprise (28) de l'autre section voisine de stockage (10b; 10c) respectivement par une section de transport horizontale réalisée en tant que section de jonction (66) s'étendant en arc,
- dans lequel les deux ou plusieurs sections de stockage (10; 10a, 10b, 10c), chacune avec des moyens de traction sans fin (58) disposés parallèlement, sont disposées les unes à côtés des autres et dans un plan horizontal commun, lesquels moyens de traction sans fin (58) sont réglables par l'intermédiaire d'un dispositif commun d'entraînement (60), ou lesquels moyens de traction sans fin (58) disposent chacun de dispositifs séparés d'entraînement (60) pour le réglage, et dans lequel les moyens de traction sans fin (58) relient chacun les première et deuxième sections de renvoi (24, 54), **caractérisé par le fait que** les moyens de traction sans fin (58) sont fixés chacun de part et d'autre sur chaque section de renvoi (24, 54) et que les moyens de traction sans fin (58) recouvrent respectivement l'espacement entre les première et deuxième sections de renvoi (24, 54) et que les sections d'appui et de transport (22) circulantes du brin de stockage (14) respectif s'appuient par leurs faces intérieures ou bien inférieures sur une face extérieure ou bien supérieure du brin supérieur (62) des moyens de traction sans fin (58) respectifs et y sont guidées à glissement.

2. Ensemble de deux ou plusieurs sections de stockage selon la revendication 1, dans lequel le brin lâche (16) et le brin de stockage (14) sont constitués par une bande transporteuse flexible, une bande transporteuse à maillons, ou similaire, commune circulant sans fin.

3. Ensemble de deux ou plusieurs sections de stockage selon la revendication 1 ou 2, dans lequel le premier plan (18) dans lequel est guidé le brin de stockage (14) respectif avec sa première section de renvoi (24), est disposé au-dessus du deuxième plan (20) dans lequel est guidé le brin lâche (16) respectif avec sa deuxième section de renvoi (54).

4. Ensemble de deux ou plusieurs sections de stockage selon l'une quelconque des revendications 1 à 3, dans lequel les première et deuxième sections de renvoi (24; 54) du brin de stockage (14) respectif ou bien du brin lâche (16) respectif décrivent chacune un arc en demi cercle ayant un axe vertical de renvoi.

5. Ensemble de deux ou plusieurs sections de stockage selon l'une quelconque des revendications 1 à 4, dans lequel le moyen de traction sans fin (58) guidé entre les deux deuxièmes moyens de renvoi (52, 56) est constitué par une bande transporteuse flexible, une bande transporteuse à maillons, une bande à lamelles ou similaire.

6. Ensemble de deux ou plusieurs sections de stockage selon la revendication 5, dans lequel les deuxièmes moyens de renvoi sont constitués chacun par des poulies de renvoi (52, 56) qui présentent des axes de rotation situés à peu près horizontalement et sur lesquelles le moyen de traction sans fin (58) est guidé et est dévié de 180 degrés à peu près.

7. Ensemble de deux ou plusieurs sections de stockage selon l'une quelconque des revendications 1 à 6, dans lequel les sections d'appui et de transport (22) circulantes du brin lâche (16) respectif s'appuient ou bien sont en appui par leurs faces intérieures ou bien inférieures sur une face extérieure, ou une face extérieure montrant vers le haut, du brin inférieur (64) du moyen de traction sans fin (58) et y sont guidées à glissement.

8. Ensemble de deux ou plusieurs sections de stockage selon l'une quelconque des revendications 1 à 7, dans lequel un dispositif d'entraînement (60) pour le réglage du moyen de traction sans fin est associé à l'un au moins des deuxièmes moyens de renvoi (52, 56).

9. Ensemble de deux ou plusieurs sections de stockage selon l'une quelconque des revendications 1 à 8, dans lequel trois ou plusieurs sections de stockage (10; 10a, 10b, 10c) sont couplées en termes de convoyage respectivement par des sections de transport horizontales réalisées en tant que sections de jonction (66) s'étendant en arc.

10. Procédé pour le stockage intermédiaire d'articles (12), de produits emballés ou de détail qui sont transportés de manière continue ou discontinue au moyen d'un dispositif de convoyage, dans lequel des articles (12), produits emballés ou de détail à stocker sont transportés dans un ensemble de deux ou plusieurs sections de stockage (10; 10a, 10b, 10c) qui présentent chacune au moins un brin de stockage (14) situé dans un premier plan (18) et chacune au moins un brin lâche (16) relié à celui-ci et situé dans un deuxième plan (20),
- dans le brin de stockage (14) respectif circulant au moins deux sections flexibles d'appui et de transport (22) pour recevoir les articles (12), produits emballés ou de détail à stocker temporairement, qui sont situées parallèlement à l'intérieur du premier plan (18) et se déplacent en sens opposé, lesdites sections d'appui et de transport (22) étant reliées par une première section de renvoi (24) qui décrit un arc de cercle de 180 degrés à peu près,
- dans lequel les sections d'appui et de transport (22) du brin de stockage (14) respectif, qui se déplacent en sens opposé, sont reliées à des points de reprise et de transfert (28; 34) localement définis sur lesquels les articles (12), produits emballés ou de détail transportés sont repris depuis d'autres sections de transport horizontales du dispositif de convoyage ou bien sont transférés à celles-ci,
- dans lequel ladite première section de renvoi (24) relie les sections d'appui et de transport (22) se déplaçant en sens opposé, sur un point qui est situé en regard des points de reprise et de transfert (28; 34),
- dans lequel ledit au moins un brin lâche (16) respectif circule dans le deuxième plan (20) qui est situé au-dessous du premier plan (18) du brin de stockage (14) respectif, dans lequel les sections d'appui et de transport (22) du brin de stockage (14) respectif sont déviées chacune au niveau des points de reprise et de transfert (28; 34), par des premiers moyens de renvoi, depuis le premier plan (18) dans le deuxième plan (20), et dans lequel les sections d'appui et de transport (22) circulant sans fin sont reliées au niveau du brin lâche (16) respectif par une deuxième section de renvoi (54) qui décrit un arc de cercle de 180 degrés à peu près,
- dans lequel la deuxième section de renvoi (54) relie les sections d'appui et de transport (22) se déplaçant en sens opposé du brin lâche (16) respectif, sur un point qui est situé en regard des points de reprise et de transfert (28; 34),
- dans lequel la première section de renvoi (24) du brin de stockage (14) respectif est associée à un brin supérieur (62), guidé au niveau du premier plan (18), d'un moyen de traction sans fin (58) réglable entre au moins deux deuxièmes moyens de renvoi (52, 56), et est couplée à celui-ci, moyen de traction sans fin (58) dont le brin inférieur (64) est guidé au niveau du deuxième plan (20) et y est couplé à la deuxième section de renvoi (54) du brin lâche (16) respectif,
- dans lequel la première section de renvoi (24) et la deuxième section de renvoi (54) sont chacune modifiées en position en sens opposé par des mouvements du moyen de traction sans fin (58) entraîné, de sorte qu'un volume de stockage du brin de stockage (14) respectif est réglé de manière variable par des changements de position de la première section de renvoi (24) et des changements de position opposés de la deuxième section de renvoi (54) du brin lâche (16) respectif,
- dans lequel lesdites deux ou plusieurs sections de stockage (10; 10a, 10b, 10c) sont disposées de telle manière qu'un point de transfert (34) de la première section de stockage (10a) est couplé en termes de convoyage à un point de reprise (28) de l'autre section voisine de stockage (10b; 10c) respectivement par une section de transport horizontale réalisée en tant que section de jonction (66) s'étendant en arc,
- dans lequel les deux ou plusieurs sections de stockage (10; 10a, 10b, 10c), chacune avec des moyens de traction sans fin (58) disposés parallèlement, sont disposées les unes à côtés des autres et dans un plan horizontal commun, lesquels moyens de traction sans fin (58) sont réglables par l'intermédiaire d'un dispositif commun d'entraînement (60), ou lesquels moyens de traction sans fin (58) disposent chacun de dispositifs séparés d'entraînement (60) pour le réglage, et dans lequel les moyens de traction sans fin (58) relient chacun les première et deuxième sections de renvoi (24, 54), **caractérisé par le fait que** les moyens de traction sans fin (58) sont fixés chacun de part et d'autre sur chaque section de renvoi (24, 54) et que les moyens de traction sans fin (58) recouvrent respectivement l'espacement entre les première et deuxième sections de renvoi (24, 54) et que les sections d'appui et de transport (22) circulantes du brin de stockage (14) respectif s'appuient par leurs faces intérieures ou bien inférieures sur une face extérieure ou bien supérieure du brin supérieur (62) des moyens de traction sans fin (58) respectifs et y sont guidées à glissement.
